# EUROPÄISCHE PATENTSCHRIFT

(11) **EP 2 368 737 B1**
(45) Veröffentlichungstag und Bekanntmachung des Hinweises auf die Patenterteilung: **28.11.2012**
(21) Anmeldenummer: 11001734.0
(22) Anmeldetag: 02.03.2011
(51) Int. Cl.: B60J 7/12

(54) **Dachkappe für ein Faltverdeck**
Top cover for a soft top
Capot de toit pour un toit escamotable

(30) Priorität: 11.03.2010 DE 102010010944
(43) Veröffentlichungstag der Anmeldung: 28.09.2011
(73) Patentinhaber: Magna Car Top Systems GmbH, 74321 Bietigheim-Bissingen (DE)
(72) Erfinder: Fischer, Thomas, Dipl.-Ing., 72074 Tübingen (DE)

(56) Entgegenhaltungen:
- EP-A2- 0 304 554
- DE-C1- 4 441 670
- DE-U1- 29 607 114

## Beschreibung

Die Erfindung bezieht sich auf eine Dachkappe für ein Faltverdeck eines Personenkraftwagens nach dem Oberbegriff des Patentanspruchs 1.

Es ist ein Klapp- bzw. Faltverdeck für ein Cabriolet bekannt, EP 0 509 326 A1, das in einem vorderen Bereich, d.h. benachbart einem Windschutzscheibenrahmen, einen sogenannten Windlaufspriegel, auch als Dachkappe bezeichnet, umfasst. Dieser Windlaufspriegel weist eine trägerartige Gestalt und in einem Randsektor ein Befestigungsprofil auf. An dem Befestigungsprofil wird ein Dichtkörper gehalten, der mittels Schlauchdichtabschnitten mit einem oberen Querträger eines Windschutzscheibenrahmens zusammenarbeitet. Der Windlaufspriegel ist mit einem U-förmigen Querschnitt einem Fahrgastraum zugewandt.

Die DE 295 09 880 U1 gibt ein Dichtprofil für ein Faltverdeck eines Kabriolets wieder, das in einem vorderen Bereich einen Spriegel besitzt. Der Spriegel trägt einen Verdeckbezug und wird nach Art eines Rahmens durch ein Oberteil und ein Unterteil gebildet. An einer horizontalen Wand des Unterteils ist ein Dichtkörper angebracht, der mit schlauchartigen Dichtabschnitten auf ein Windschutzprofil einwirkt.

In der DE 44 41 667 C1 wird ein Verdeckbezug eines Faltverdecks für ein Fahrzeug behandelt, der von einem großflächigen Gussteil aus Leichtmetall getragen wird. An dem Gussteil ist eine Halteschiene für einen Dichtkörper befestigt, der sich dichtend an einem oberen Querträger eines Windschutzscheibenrahmens abstützt. Der Querträger setzt sich aus zwei an Flanschen zusammengesetzten unteren und oberen Profilschalen zusammen, wobei die untere Profilschale in Richtung Fahrgastraum ausgerichtet ist, und die untere Profilschale ist mit einer Innenverkleidung abgedeckt.

Es ist Aufgabe der Erfindung, eine Dachkappe für ein Faltverdeck eines Personenkraftwagens zu konzipieren, die zum einen einen Dichtkörper zwischen Dachkappe und Windschutzscheibenrahmen funktionsgerecht aufnimmt und zum anderen eine gute Halterung angrenzender, z.B. sicherheitsrelevanter einem Fahrgastraum zugewandter Verdeckkomponenten gewährleistet.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Dachkappe des Faltverdecks auf der dem Fahrgastraum zugekehrten Seite vorbildlich mit einem Verkleidungsteil abgedeckt ist, das musterhaft einerseits mit der vorderen Randzone in die Aufnahme des Halteelement eingreift und andererseits über die Verbindungseinrichtung an der Dachkappe befestigt ist. Diese Konstruktion stellt sicher, dass das Verkleidungsteil auch bei außergewöhnlichen Belastungen auf den Windschutzscheibenrahmen bzw. dessen oberen Querträger, bspw. hervorgerufen durch eine Havarie, in einer definierten Lage verbleibt und dadurch Verletzungsgefährdungen von im Fahrgastraum sitzenden Passagieren entgegenwirkt. Dabei ist hervorzuheben, dass das Verkleidungsteil selbst wie auch das Haltelement zur Aufnahme des Flansches des Verkleidungsteils und die Verbindungsvorrichtung mit der Stützeinrichtung bzw. dem oberen Stützelement und dem unteren Stützelement sich bei guter Funktion aufwandsarm realisieren lassen.

In der Zeichnung ist ein Ausführungsbeispiel der Erfindung dargestellt, das nachstehend näher erläutert wird.

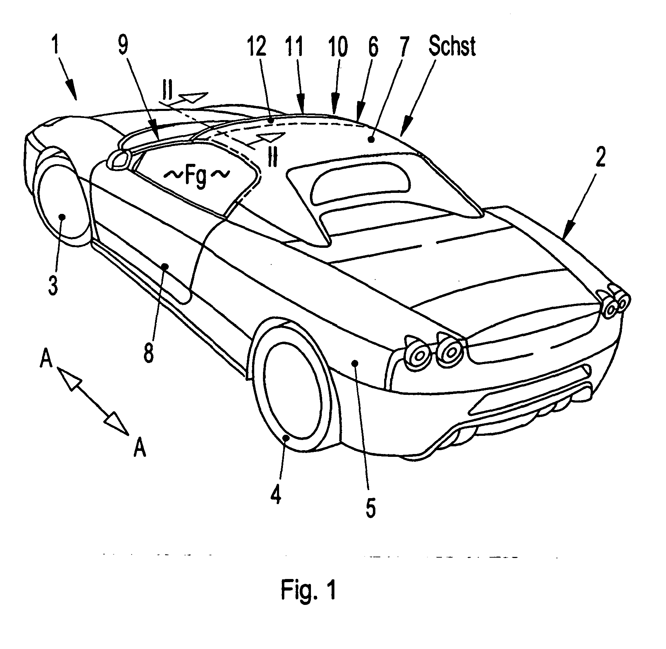

Es zeigen
Fig. 1 eine Schrägansicht von vorne links oben auf einen Personenkraftwagen mit einem beweglichen Dach in Gestalt eines Faltverdecks,
Fig. 2 einen Schnitt nach der Linie II-II der Fig. 1 in größerem Maßstab,
Fig. 3 eine Einzelheit X der Fig. 1,
Fig. 4 ein Einzelheit Y der Fig. 3 in größerem Maßstab,
Fig. 5 eine Schrägansicht von vorne rechts oben auf ein Verkleidungsteil einer Dachkappe des Faltverdecks nach den Fig. 1 und 2,
Fig. 6 eine Schrägansicht von vorne links oben auf eine Schlitzdurchgangsöffnung des Verkleidungsteils nach Fig. 3.

Ein Personenkraftwagen 1 umfasst einen Aufbau 2, der von Rädern 3 und 4 getragen wird und einen Grundkörper 5 und ein bewegliches von einer Schließstellung Schst in eine Offenstellung -nicht gezeigt- verstellbares Dach 6 umfasst, das als am Aufbau 2 gelagertes Faltverdeck 7 ausgebildet ist. Am Grundkörper 5 gehalten sind Seitentüren 8 und ein Windschutzscheibenrahmen 9, der einen oberen Querträger 10 besitzt. Mit dem Querträger 10 wirkt ein vorderer Bereich 11, z. B. in Gestalt eine Dachkappe 12, des einen Fahrgastraum Fg in der Schließstellung Schst überspannenden Faltverdecks 7 zusammen; eine Fahrzeuglängsrichtung ist mit A-A bezeichnet.

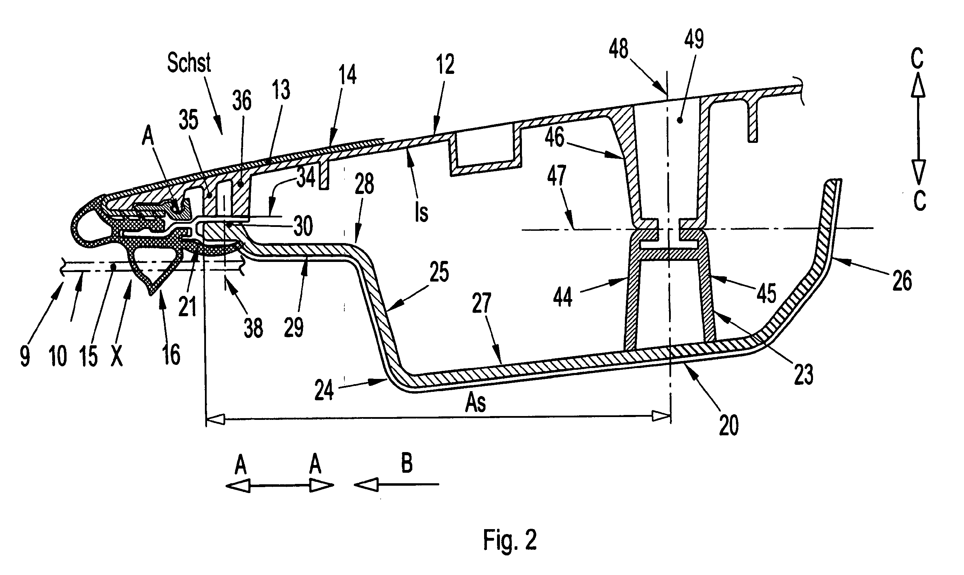

Die aus formsteifem Werkstoff bspw. Leichtmetallguss bestehende Dachkappe 12 des Faltverdecks 7 trägt einen Teilabschnitt 13 eines flexiblen Verdeckbezugs 14 -Fig. 2-. Zwischen Dachkappe 12 und einer horizontalen Wand 15 des oberen Querträgers 10 des Windschutzscheibenrahmens 9 ist ein Dichtkörper 16 wirksam, der unter Vermittlung eines leistenartigen z.B. metallischen durch Strangpressen hergestellten Halteelements 17 an dieser Dachkappe 12 befestigt ist. Das Haltelement 17 ragt mit einem Tragsteg 18 in einen im Querschnitt U-förmigen Aufnahmeabschnitt 19 des Dichtkörpers 16 hinein.

Unterhalb einer Innenseite Is der Dachkappe 12 -Fig.2-, die dem Fahrgastraum Fg zugekehrt ist, ist ein Verkleidungsteil 20 vorgesehen, das sich -in Fahrzeuglängsrichtung A-A gesehen- über eine wesentliche Länge der Dachkappe 12 erstreckt, aus einem zwar formsteifen, jedoch Kopfaufschlag von Passagieren absorbierenden Material wie Kunststoff besteht und mit einer in Fahrtrichtung B betrachtet vorderen Randzone 21 in eine Aufnahme 22 des Haltelements 17 hineinragt. Darüber hinaus ist das Haltelement 17 -entgegen der Fahrtrichtung B betrachtet- mit Abstand zur Randzone 21 unter Vermittlung einer Verbindungseinrichtung 23 an der Dachkappe 12 befestigt -Fig. 2-.

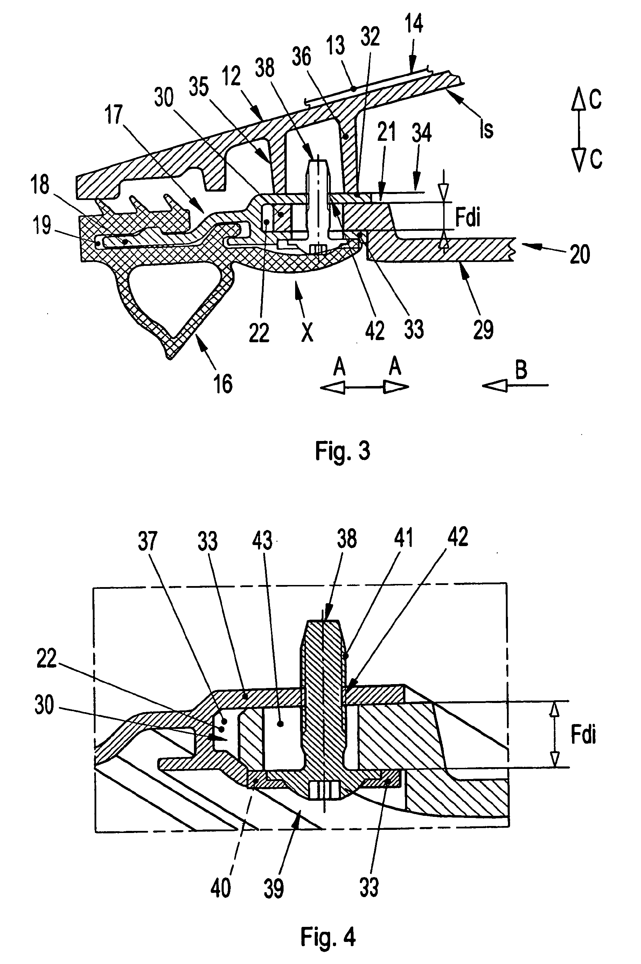

Das Verkleidungsteil 20 weist einen etwa U-förmigen Querschnitt 24 auf und ist in Fahrtrichtung B gesehen mit einem vorderen aufrechten Schenkelabschnitt 25 und einem hinteren aufrechten Schenkelabschnitt 26 versehen, zwischen denen sich ein tendenziell horizontal verlaufender Stegabschnitt 27 erstreckt. Der vordere Schenkelabschnitt 25 ist an seinem oberen freien Ende 28 mit einer horizontalen Verlängerung 29 versehen, an die die Randzone 21 angeformt ist. Die Randzone 21 ruht mit einem Flansch 30 in der Aufnahme 22 des Haltelements 17, die einen liegenden U-förmigen Querschnitt 31 mit horizontalen in Fahrzeughöhenrichtung C-C betrachtet oberen Schenkeln 32 und unteren Schenkeln 33 besitzt -Fig. 3-. Der U-förmige Querschnitt 31 ist aus einem Stück mit dem Haltelement 17 hergestellt, und sein oberer Schenkel 32 stützt sich an einem Auflagebereich 34 der Dachkappe 12 ab, der im Ausführungsbeispiel durch zwei senkrechte Rippen 35 und 36 dieser Dachkappe 12 gebildet wird.

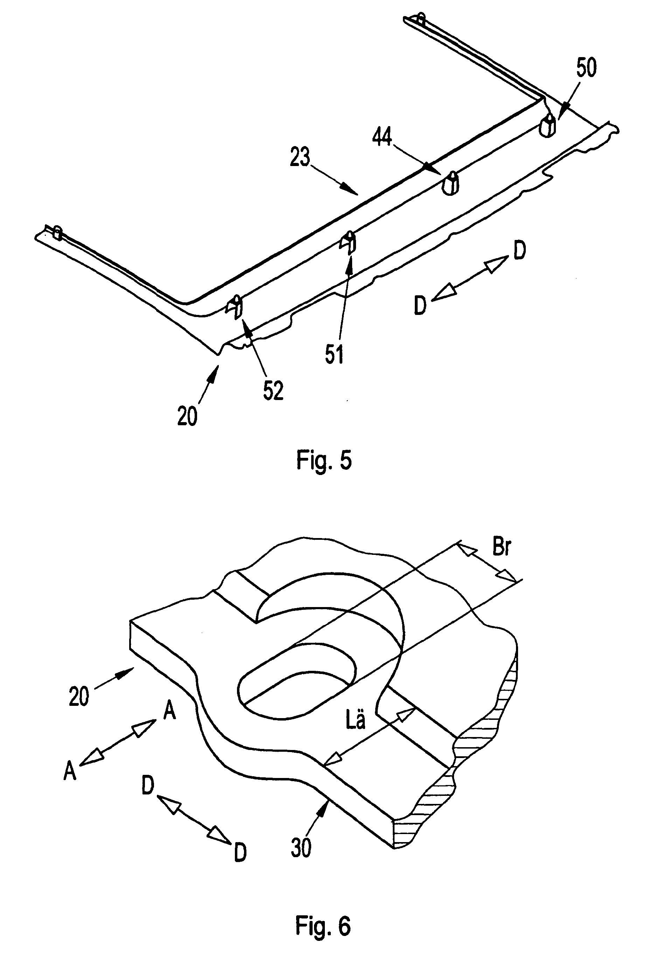

Der Flansch 30 der Verlängerung 29 des Verkleidungsteils 20 weist eine Flanschdicke Fdi auf -Fig. 3 und 4-, die so in einen Raum 37 zwischen den Schenkeln 32 und 33 eingepasst ist, dass sie an den korrespondierenden Seiten der besagten Schenkel 32 und 33 anliegt. Unter Vermittlung wenigstens einer senkrecht ausgerichteten Schraube 38 wird der Flansch 30 des Verkleidungsteils 20 am oberen Schenkel 32 des Haltelements 17 in Lage gehalten. Hierzu ist der untere Schenkel 33 des Halteelements 17 im Bereich eines Schraubenkopfs 39 der Schraube 38 mit einem Ausschnitt 40 versehen und der Schraubenkopf 39 stützt sich unmittelbar am Flansch 30 ab. Und ein Gewindebolzen 41 der Schraube 38 ist in ein Gewinde 42 des oberen Schenkels 32 hineingedreht. Außerdem ist der Flansch 30 des Verkleidungsteils 20 mit einer Schlitzdurchgangsöffnung 43 -Fig. 6- für den Gewindebolzen 41 der Schraube 38 versehen, deren Länge Lä in Fahrzeuglängsrichtung A-A betrachtet größer ist als ihre Breite Br in Fahrzugquerrichtung D-D.

Die Verbindungseinrichtung 23 zwischen Dachkappe 12 und Verkleidungsteil 20 umfasst wenigstens eine Stützeinrichtung 44 -Fig. 2- mit einem unteren Stützelement 45 an dem Verkleidungsteil 20 und ein oberes Stützelement 46 an der Dachkappe 12. Das untere Stützelement 45 und das obere Stützelement 46 sind an einander zugekehrten Endbereichen an einer horizontalen Stützebene 47 zusammengesetzt. Beide Stützelemente 45 und 46 sind hohl ausgeführt und können nach Art von Zylindern mit einem kreisförmigen Querschnitt ausgebildet sein. Das untere Stützelement 44 und das obere Stützelement 45 werden über eine im Wesentlichen senkrecht stehende lediglich schematisch dargestellte Schraube 48 zusammengehalten, die über eine Öffnung 49 der Dachkappe 12 aus eingeschraubt wird. Schließlich gibt die Fig. 5 das Verkleidungsteil 20 wieder, das über mehrere Stützeinrichtungen 44, 50, 51 und 52 an der Dachkappe 12 gehalten wird.

## Patentansprüche

1. Dachkappe für ein Faltverdeck eines Personenkraftwagens, die sich benachbart eines oberen Querträgers eines in einen Aufbau integrierten Windschutzscheibenrahmens erstreckt, aus formsteifem Werkstoff besteht und ein Halteelement trägt, welches Halteelement zur Befestigung eines zwischen Dachkappe und oberem Querträger wirkenden Dichtkörpers dient, **dadurch gekennzeichnet, dass** auf einer einem Fahrgastraum (Fg) zugekehrten Seite der Dachkappe (12) sich ein Verkleidungsteil (20) erstreckt, das mit einer vorderen Randzone (21) in eine Aufnahme (22) des Halteelements (17) eingreift und -entgegen der Fahrtrichtung (B) betrachtet- mit Abstand (As) zur Randzone (21) über eine Verbindungseinrichtung (23) an der Dachkappe (12) befestigt ist.

2. Dachkappe nach Anspruch 1, **dadurch gekennzeichnet, dass** das Verkleidungsteil (20) im Querschnitt in etwa U-förmig gestaltet ist und einen vorderen aufrechten Schenkelabschnitt (25) und einen hinteren aufrechten Schenkelabschnitt (26) aufweist, zwischen denen sich ein Stegabschnitt (27) erstreckt, wobei der vordere Schenkelabschnitt (25) mit einer die Randzone (21) aufweisenden Verlängerung (29) versehen ist.

3. Dachkappe nach den Ansprüchen 1 und 2, **dadurch gekennzeichnet, dass** die Randzone (21) des Verkleidungsteils (20) mit einem Flansch (30) in der einen liegenden U-förmigen Querschnitt (31) aufweisenden Aufnahme (22) des Halteelements (17) ruht.

4. Dachkappe nach Anspruch 3, **dadurch gekennzeichnet, dass** der U-förmige Querschnitt des Halteelements (17) bspw. Bestandteil eines metallischen Strangpressprofils mit liegendem oberen Schenkel (32) und unteren Schenkeln (33) ist, wobei der obere Schenkel (32) sich an einem Auflagebereich (34) der Dachkappe (12) abstützt.

5. Dachkappe nach den Ansprüchen 3 und 4, **dadurch gekennzeichnet, dass** der Flansch (30) der Verlängerung (29) des Verkleidungsteils (20) unter Vermittlung wenigstens einer Schraube (38) am oberen Schenkel (32) der Aufnahme (22) des Halteelements (17) in Lage gehalten wird.

6. Dachkappe nach den Ansprüchen 4 und 5, **dadurch gekennzeichnet, dass** der untere Schenkel (32) im Bereich des Halteelements (17) im Bereich eines Schraubenkopfs (39) ausgeschnitten ist, welcher Schraubenkopf (39) sich unmittelbar am Flansch (30) abstützt, wobei ein Gewindebolzen (41) der Schraube (38) in eine Gewindebohrung (42) des oberen Schenkels (32) hineingedreht ist.

7. Dachkappe nach den Ansprüchen 4 bis 6, **dadurch gekennzeichnet, dass** in den Flansch (30) des Verkleidungsteils (20) eine Schlitzdurchgangsöffnung (43) für den Gewindebolzen (41) eingearbeitet ist, deren Länge (Lä) in Fahrzeuglängsrichtung (A-A) betrachtet größer ist als ihre Breite (Br) in Fahrzeugquerrichtung (D-D).

8. Dachkappe nach Anspruch 1, **dadurch gekennzeichnet, dass** die Verbindungseinrichtung (23) wenigstens eine Stützeinrichtung (44) mit einem unteren Stützelement (45) an dem Verkleidungsteil (20) und einem oberen Stützelement (46) an der Dachkappe (12) aufweist, wobei Enden der Stützelemente (45 und 46) an einer Stützebene (47) zusammengesetzt sind.

9. Dachkappe nach Anspruch 8, **dadurch gekennzeichnet, dass** -in Fahrzeugquerrichtung (D-D) gesehen- mehrere Stützeinrichtungen (44, 50, 51 und 52) vorgesehen sind.

10. Dachkappe nach den Ansprüchen 8 und 9, **dadurch gekennzeichnet, dass** das untere Stützelement (45) und das obere Stützelement (46) der Stützeinrichtung (44) unter Vermittlung einer Schraube (48) zusammengebaut sind.

## Claims

1. Roof cap for a folding top of a passenger car, which roof cap extends adjacently to an upper crossmember of a windscreen frame integrated into a body, is made of dimensionally rigid material and bears a retaining element, which retaining element serves for fastening a sealing body extending between the roof cap and upper crossmember, **characterized in that** a lining part (20) extends on a side of the roof cap (12) facing a passenger compartment (Fg) and engages with a front edge zone (21) into a receptacle (22) of the retaining element (17) and - as viewed counter to the direction of travel (B) - is fastened via a connecting device (23) to the roof cap (12) at a distance (As) from the edge zone (21).

2. Roof cap according to Claim 1, **characterized in that** the lining part (20) is designed to be approximately U-shaped in cross section and has a front upright leg portion (25) and a rear upright leg portion (26) between which a web portion (27) extends, wherein the front leg portion (25) is provided with an extension (29) having the edge zone (21).

3. Roof cap according to Claims 1 and 2, **characterized in that** the edge zone (21) of the lining part (20) rests with a flange (30) in the receptacle (22) of the retaining element (17), which receptacle has a horizontal U-shaped cross section (21).

4. Roof cap according to Claim 3, **characterized in that** the U-shaped cross section of the retaining element (17) is, for example, part of a metallic extruded profile with a horizontal upper leg (32) and lower legs (33), wherein the upper leg (32) is supported on a bearing region (34) of the roof cap (12).

5. Roof cap according to Claims 3 and 4, **characterized in that** the flange (30) of the extension (29) of the lining part (20) is held in position on the upper leg (32) of the receptacle (22) of the retaining element (17) by means of at least one screw (38).

6. Roof cap according to Claims 4 and 5, **characterized in that** the lower leg (32) is cut out in the region of the retaining element (17) in the region of a screw head (39), which screw head (39) is supported directly on the flange (30), wherein a threaded bolt (41) of the screw (38) is screwed into a threaded bore (42) in the upper leg (32).

7. Roof cap according to Claims 4 to 6, **characterized in that** a slotted through opening (43) for the threaded bolt (41) is incorporated in the flange (30) of the lining part (20), the length (Lä) of which opening as viewed in the vehicle longitudinal direction (A-A) is greater than its width (Br) in the vehicle transverse direction (D-D).

8. Roof cap according to Claim 1, **characterized in that** the connecting device (23) comprises at least one supporting device (44) with a lower supporting element (45) on the lining part (20) and an upper supporting element (46) on the roof cap (12), wherein ends of the supporting elements (45 and 46) are joined together at a supporting plane (47).

9. Roof cap according to Claim 8, **characterized in that** - as viewed in the vehicle transverse direction (D-D) - a plurality of supporting devices (44, 50, 51 and 52) are provided.

10. Roof cap according to Claims 8 and 9, **characterized in that** the lower supporting element (45) and the upper supporting element (46) of the supporting device (44) are assembled by means of a screw (48).

## Revendications

1. Capot de toit pour un toit escamotable d'une voiture automobile, qui s'étend à proximité d'une traverse supérieure d'un cadre de pare-brise intégré dans une carrosserie, qui est constitué d'un matériau de forme rigide et qui supporte un élément de retenue, lequel élément de retenue sert à la fixation d'un corps d'étanchéité agissant entre le capot de toit et la traverse supérieure, **caractérisé en ce qu'**une partie d'habillage (20) s'étend d'un côté du capot de toit (12) qui est tourné vers un habitacle (Fg), laquelle partie d'habillage s'engage par l'intermédiaire d'une zone de bord avant (21) dans un logement (22) de l'élément de retenue (17) et, considéré dans le sens contraire au sens de conduite (B), est fixée au capot de toit (12) au moyen d'un dispositif de liaison (23) à une distance (As) par rapport à la zone de bord (21).

2. Capot de toit selon la revendication 1, **caractérisé en ce que** la partie d'habillage (20) est configurée approximativement en forme de U en section transversale et comprend une partie de branche verticale avant (25) et une partie de branche verticale arrière (26) entre lesquelles s'étend une partie formant pont (27), la partie de branche avant (25) étant pourvue d'un prolongement (29) comprenant la zone de bord (21).

3. Capot de toit selon les revendications 1 et 2, **caractérisé en ce que** la zone de bord (21) de la partie d'habillage (20) repose, par l'intermédiaire d'une bride (30), dans le logement (22) de l'élément de retenue (17) présentant une section transversale en forme de U couché (31).

4. Capot de toit selon la revendication 3, **caractérisé en ce que** la section transversale en forme de U de l'élément de retenue (17) fait par exemple partie d'un profilé extrudé métallique doté d'une branche supérieure (32) et d'une branche inférieure (33) couchées, la branche supérieure (32) s'appuyant contre une région d'appui (34) du capot de toit (12).

5. Capot de toit selon les revendications 3 et 4, **caractérisé en ce que** la bride (30) du prolongement (29) de la partie d'habillage (20) est maintenue en position sur la branche supérieure (32) du logement (22) de l'élément de retenue (17) par l'intermédiaire d'au moins une vis (38).

6. Capot de toit selon les revendications 4 et 5, **caractérisé en ce que** la branche inférieure (32) dans la région de l'élément de retenue (17) est découpée dans la région d'une tête de vis (39), laquelle tête de vis (39) s'appuie directement sur la bride (30), une tige filetée (41) de la vis (38) étant vissée dans un alésage fileté (42) de la branche supérieure (32).

7. Capot de toit selon les revendications 4 à 6, **caractérisé en ce qu'**une ouverture traversante en forme de fente (43) pour la tige filetée (41) est incorporée dans la bride (30) de la partie d'habillage (20), la longueur (Lä) de cette ouverture, considéré dans la direction longitudinale du véhicule (A-A), étant supérieure à sa largeur (Br) dans la direction transversale du véhicule (D-D).

8. Capot de toit selon la revendication 1, **caractérisé en ce que** le dispositif de liaison (23) comprend au moins un dispositif de support (44) doté d'un élément de support inférieur (45) sur la partie d'habillage (20) et d'un élément de support supérieur (46) sur le capot de toit (12), des extrémités des éléments de support (45 et 46) étant assemblées au niveau d'un plan de support (47).

9. Capot de toit selon la revendication 8, **caractérisé en ce que**, vu dans la direction transversale du véhicule (D-D), plusieurs dispositifs de support (44, 50, 51 et 52) sont prévus.

10. Capot de toit selon les revendications 8 et 9, **caractérisé en ce que** l'élément de support inférieur (45) et l'élément de support supérieur (46) du dispositif de support (44) sont assemblés par l'intermédiaire d'une vis (48).
